# EUROPEAN PATENT SPECIFICATION

(11) **EP 1 873 958 B1**
(45) Date of publication and mention of the grant of the patent: **30.05.2012**
(21) Application number: 07109292.8
(22) Date of filing: 31.05.2007
(51) Int. Cl.: H04L 7/00, G06F 17/30, H04L 12/28, H04L 29/08

(54) **Method and apparatus for synchronising the content directory service in a Universal Plug and Play (UPnP) network**
Verfahren und Vorrichtung zur Synchronisierung eines Inhaltsverzeichnisdienstes in einem UPnP (Universal Plug and Play) Netzwerk
Procédé et appareil de synchronisation de service de directoire de contenu dans un réseau UPnP (Universal Plug and Play)

(30) Priority: 30.06.2006 KR 20060060686
(43) Date of publication of application: 02.01.2008
(73) Proprietor: Samsung Electronics Co., Ltd., Gyeonggi-do 442-742 (KR)
(72) Inventor: Kwon, Won-seok 1006-1503 Bangjuk Maeul,, Suwon-si, Gyeonggi-do (KR); Lee, Joo-yeol, Seocho-gu, Seoul (KR); Oh, Seung-jae, Gangnam-gu, Seoul (KR); Jung, Dong-shin, Suwon-si, Gyeonggi-do (KR); Han, Se-hee, Seongbuk-gu, Seoul (KR)
(74) Representative: Grootscholten, Johannes A.M.

(56) References cited:
- EP-A- 1 345 357
- WO-A-00/51289
- GB-A- 2 327 781
- US-A1- 2002 078 256
- RITCHIE J ET AL: "UPnP AV Architecture: 0.83" DESIGN DOCUMENT MICROSOFT, 12 June 2002 (2002-06-12), pages 1-22, XP002271673

## Description

The present invention relate to a home network, and more particularly but not exclusively, to a method and apparatus for synchronizing content directory services that are provided by Universal Plug and Play devices.

Universal Plug and Play Device Architecture (UPnP) is a networking protocol that discovers and controls electronic appliances connected to a network and is a standard technique in home networking. UPnP Audio/Video (AV) is a UPnP-based protocol whereby multimedia content, such as audio or video, can be easily used via a network.

UPnP AV architecture includes a MediaServer, a MediaRenderer, and a control point to control them. A MediaServer is a device that provides a multimedia file (e.g., a song in MP3 format) via a content directory service (CDS), a storage location that can provide detailed information on the content stored in it. A MediaRenderer is a device that reproduces a multimedia file (e.g., an MP3 player of a home media center). The control point controls the MediaServer and the MediaRenderer so that they can interact with each other, such as by transferring files. When a UPnP AV architecture environment is set up, a plurality of MediaServers may be present in a home network, and the MediaServers may store different content. In such an environment, a user is likely to have a requirement that a plurality of pieces of content that are scattered on different MediaServers in different CDSs be easily synchronized. For example, the user may desire to synchronize his or her MP3 player with a home media center so he or she can listen to music content stored in the MP3 player, via speakers connected to a home media center. This requires the transfer of the music content from the MP3 player to the home media center.

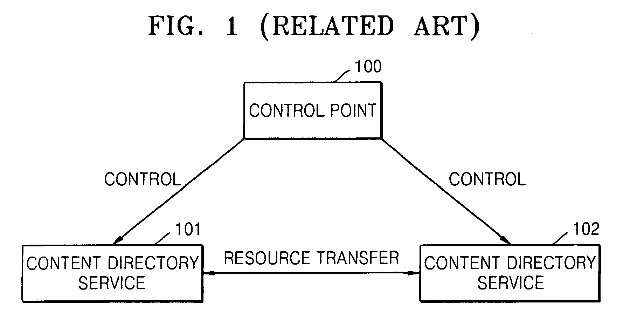

FIG. 1 is a diagram of a conventional method of synchronizing a CDS of two UPnP devices. A user selects the two devices to be synchronized by using a control point 100, and performs the synchronization by controlling CDS 101 and CDS 102, which are respectively provided by the devices (not shown), so as to transmit content between the devices so that both devices have the same content (e.g., both store the same songs, pictures, and movies).

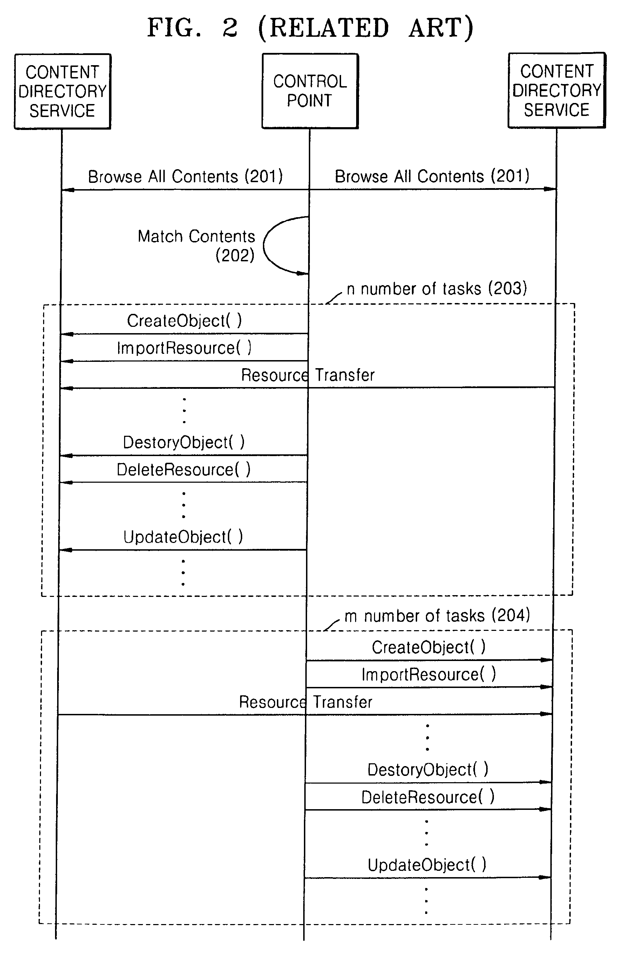

FIG. 2 is a flowchart of a conventional method of synchronizing a content directory service of two UPnP devices. Hereafter, it is assumed that two UPnP devices are present and CDSs are provided by the two UPnP devices.

Referring to FIGS. 1 and 2, a control point 100 selects two devices to synchronize and calls a browse() action (operation 201) of a CDS of each of the two devices so as to obtain a list of content stored in each CDS (CDS 101 and CDS 102). The lists of content (CDS 101 and CDS 102) of both devices are compared, and the control point 100 determines which object(s) will be added to, deleted from, or be changed in the selected devices so that they will have identical contents (operation 202). The object(s) includes all types of data entities that a content directory service returns as a result to calling the browse() action or a search() action. Thus, the object(s) may be metadata of content (e.g., the biography of a singer, the rating of a movie), or a resource binary of the content (e.g., a song file).

The control point deletes 100 or adds content by using actions provided by the CDS (101 and 102) of each device. More specifically, the control point controls a CDS (101 and 102) to obtain new content using a HTTP GET command by calling a CreateObject() action and an ImportResource() action of the CDS (101 and 102) to which the new content is to be added (operations 203 and 204).

A DestroyObject() action and a DeleteResource() action are used to delete content, and an UpdateObject() action is used to modify metadata of content.

When synchronization of UPnP AV devices is performed using conventional UPnP (as described above), all of the content lists of CDSs of all the devices must be searched in order to determine which object(s) needs to be synchronized to duplicate content between devices. When the amount of content is large, load on a memory or central processing unit (CPU) of the control point is significantly increased because of the large amount of searching and comparisons required. Also, the greater the number of objects to be synchronized, the greater the number of actions of a content directory service that must be called, which generates more network traffic and reduces the speed of synchronization.

Any one of the disclosures of WO-00/51.289, EP-A-1.345.357 and US-A-2002/078.256 is acknowledged to constitute the prior art in relation to the present invention, over which the present invention is distinguished by the features in the characterizing portions of the appended independent claims,

Embodiments of the present invention aim to provide an apparatus and method for synchronizing a content directory service between Universal Plug and Play (UPnP) devices by using an event message and do not require a control point's involvement.

Additional aspects and/or advantages of the invention will be set forth in part in the description which follows and, in part, will be obvious from the description, or may be learned by practice of the invention.

In accordance with an aspect of the present invention, there is provided a method of synchronizing a content directory service of a Universal Plug and Play device, the method comprising all features of independent claim 1.

In accordance with another aspect of the present invention, there is provided a Universal Plug and Play device comprising an apparatus according to independent claim 8.

In accordance with another aspect of the present invention, there is provided a method of synchronizing a content directory service of a Universal Plug and Play (UPnP) device according to claim 13.

In accordance with another aspect of the present invention, there is provided a Universal Plug and Play device comprising an apparatus according to claim 19.

Additional aspects and/or advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
FIG. 1 is a diagram of a conventional method of synchronizing a content directory service of two Universal Plug and Play (UPnP) devices;
FIG. 2 is a flowchart of a conventional method of synchronizing a content directory service of two UPnP devices;
FIG. 3 is a diagram of a method of synchronizing a content directory service between UPnP devices, according to an embodiment of the present invention;
FIG. 4 is a flowchart of a method of synchronizing a content directory service of a UPnP device, according to an embodiment of the present invention;
FIG. 5 is a flowchart of a method of synchronizing a content directory service of a UPnP device by using an event message, according to an embodiment of the present invention;
FIG. 6 is a block diagram of a UPnP device that synchronizes a content directory service, according to an embodiment of the present invention;
FIG. 7 is a block diagram of a UPnP device that synchronizes a content directory service, according to another embodiment of the present invention; and
FIG. 8 is a block diagram of a UPnP device that synchronizes a content directory service, according to another embodiment of the present invention.

Reference will now be made in detail to the present embodiments of the present invention, examples of which are illustrated in the accompanying drawings, wherein like reference numerals refer to the like elements throughout. The example embodiments are described below in order to explain the present invention by referring to the figures.

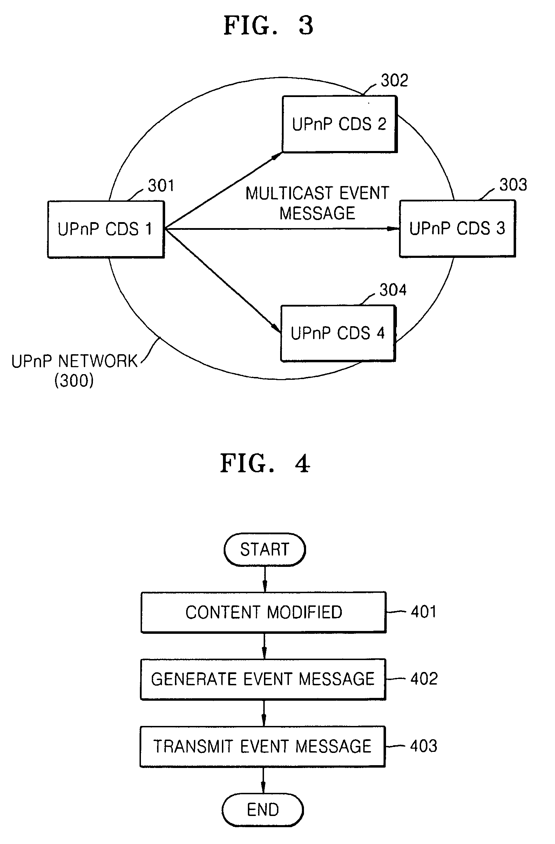

FIG. 3 is a diagram of a method of synchronizing a content directory service (hereinafter referred to as "CDS") between Universal Plug and Play (hereinafter referred to as "UPnP") devices, according to an embodiment of the present invention. When a plurality of CDSs is synchronized, lists of content provided by the CDSs are equalized so all of the CDSs contain the same content. However, in another aspect of the present invention, the range of objects to be synchronized may be limited to a particular container. For example, a user may synchronize his or her MP3 player with a particular folder located in a home media center rather than all of the content stored in the home media center. In another aspect of the present invention, the content to be synchronized may depend on the capabilities of a device. For example, when audio content and video content are stored in a particular folder of a home media center, and a user synchronizes his or her MP3 player with the particular folder, synchronization is performed only for audio content supported by the MP3 player.

In the present exemplary embodiment, it is assumed that content of a first CDS 301 has been modified. As illustrated in FIG. 3, the first CDS 301, a second CDS 302, a third CDS 303, and a fourth CDS 304 are present in a UPnP network 300. It should be understood that, while the present exemplary embodiment shown in FIG. 3 uses a network of four CDSs, embodiments of the present invention relate to synchronizing a plurality of CDSs on a network, from a lower limit of a two CDSs to an upper limit of the number of devices restricted only by the capabilities of the UPnP network.

According to an embodiment of the present invention, when the content of the first CDS 301 is modified, a control point (not shown) is not required to and does not intervene in a process of synchronizing the CDSs on the UPnP network 300. That is, when the content of the first CDS 301 is modified, the first CDS 301 inserts information of the modified content, of a plurality of pieces of content that the first CDS 301 can provide, into an event message, and multicasts the event message over the UPnP network 300. The second CDS 302, the third CDS 303, and the fourth CDS 304 receive the event message transmitted with a multicast address, and then update their content to be identical to the modified content of the first CDS 301.

Thus, when a user later calls a browse() action or a search() action of the first CDS 301 by using a control point (not shown), the result returned by the first CDS 301 will be identical to results returned from the second CDS 302, the third CDS 303, and the fourth CDS 304. As discussed above, another aspect of the present invention synchronizes only the content of a particular container (e.g., a certain directory on a hard drive), and in another aspect of the present invention, the objects synchronized are those that match the capabilities of the device receiving the event message.

FIG. 4 is a flowchart of a method of synchronizing a CDS of a UPnP device, according to an embodiment of the present invention. In block 401, a UPnP device, (e.g., a UPnP MediaServer which can provide a CDS to a control point) has its content modified, such as by the addition of new content (e.g., addition of a movie), a deletion of content (e.g., deletion of a movie), or a change of meta data of content (e.g., change of a rating of a movie).

In block 402, an event message containing information regarding the modified content is generated. According to one embodiment of the present invention, the information regarding the modified content is expressed using a DIDL-Lite (Digital Item Declaration Language) object.

In block 403, the event message (generated in block 402) is multicast on a UPnP network so other devices receiving the event message can synchronize their content using the information contained in the event message.

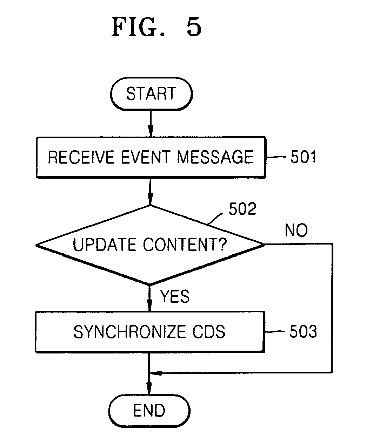

FIG. 5 is a flowchart of a method of synchronizing a content directory service of a UPnP device by using an event message, according to an embodiment of the present invention. In block 501, the UPnP device receives a multicast event message transmitted according to the method shown in FIG. 4. The event message contains information regarding modified content of a CDS on a message sending device, as described above.

In block 502, the UPnP device that received the event message determines whether to update content of the receiving UPnP device, based on the information contained in the event message, according to a predetermined synchronization policy. The synchronization policy may vary among devices on a network and is determined via an external user interface or by using a UPnP action. As discussed above, examples of different synchronization policies are duplication of content, synchronization of a particular container, and synchronization based on the capabilities of the device. Additionally, to reduce network traffic, the UPnP device that received the event message may determine that a synchronization is not needed, based on date and time information included in the event message. In an embodiment of the present invention, the UPnP device stores prior event messages from devices and only connects for synchronization (in accordance with the synchronization policy) to a device sending an event message if the content modification described in the event message occurred later in time than the content modification described in the prior event messages. In another embodiment of the present invention, the receiving UPnP device stores information on prior synchronizations with devices, and only connects for synchronization (in accordance with the synchronization policy) to a device sending an event message if the content modification described in the event message occurred later in time than the previous synchronization of those two devices.

In block 503, when it is determined (in operation 502) that the content of the device that received the event message will be updated, the CDS of the receiving device is synchronized based on the content of the event message. That is, the content of the device which received the event message is updated using the information contained in the received event message.

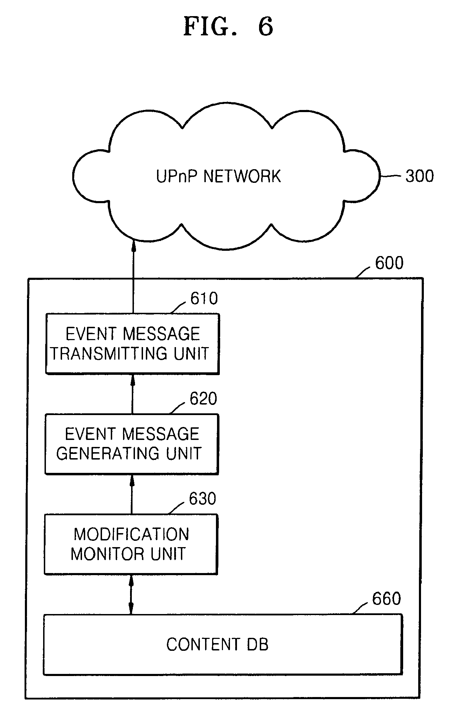

FIG. 6 is a block diagram of a UPnP device that synchronizes a CDS according to an embodiment of the present invention. In FIG. 6, the UPnP device 600 includes an event message transmitting unit 610, an event message generating unit 620, a modification monitor unit 630, and a content database ("DB") 660. The UPnP device 600 is connected to a UPnP network 300.

The content DB 660 manages a list of content and resources of a CDS that the UPnP device 600 provides. The content DB 660 may consist of resource binaries of the content or metadata of content.

The modification monitor unit 630 monitors the content DB 660 in order to sense when the content is modified, and informs the event message generating unit 620 when a modification occurs.

When content modification occurs, the event message generating unit 620 generates an event message containing information on the modified content, and the event message transmitting unit 610 multicasts the generated event message to the UPnP network 300.

The event message transmitting unit 610, the event message generating unit 620, and the modification monitor unit 630 are components that together inform other devices (not shown) connected to the UPnP network 300 when the content of the UPnP device 600 (i.e., the content provided from the CDS of the UPnP device 600) has been modified.

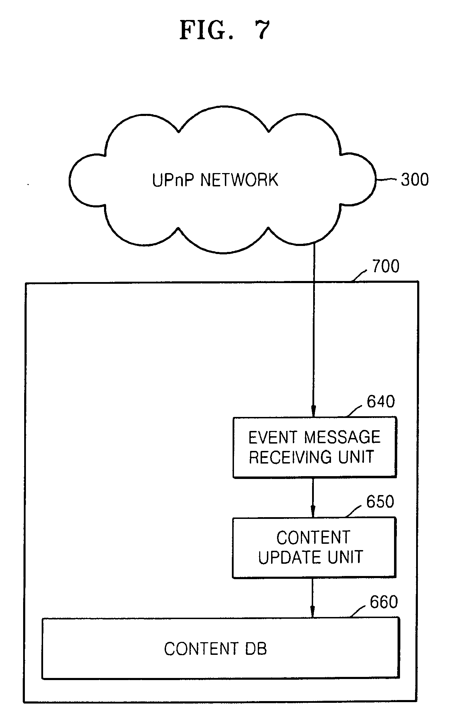

FIG. 7 is a block diagram of a UPnP device that synchronizes a content directory service, according to another embodiment of the present invention. In FIG. 7, the UPnP device 700 includes an event message receiving unit 640, a content update unit 650, and a content database (DB) 660. The UPnP device 700 is connected to a UPnP network 300.

The event message receiving unit 640 and the content update unit 650 are components that update the CDS of the UPnP device 700 when the UPnP device 700 receives an event message informing the UPnP device 700 that content provided by another CDS on the network has been modified. The purpose and function of the content DB 660 is described above with reference to FIG. 6.

The event message receiving unit 640 receives a multicast event message sent by another device (not shown) on the UPnP network 300, and the event message contains information on the modified content of a CDS of the sending device. The event message receiving unit 640 delivers the message to the content update unit 650. The content update unit 650 updates the content DB 660 using the information contained in the event message to synchronize the CDS of the UPnP device 700 to the CDS of the sending device.

In one embodiment of the present invention, whenever the UPnP device 700 receives an event message related to modified content of a device, the UPnP device 700 connects to the modified device to compare contents. In another embodiment of the present invention, the UPnP device 700 connects to synchronize if the event message matches its synchronization policy. Combined with a synchronization policy, the content update unit 650 may determine if a synchronization of the content DB 660 to the modified device is required by using additional information. In an embodiment of the present invention, the UPnP device 700 stores information on prior synchronizations with devices (in the content DB 660), and only connects (in accordance with the synchronization policy) to the modified device if the content update unit 650 determines that the content modification described in the event message occurred later in time than the previous synchronization of those two devices. In another embodiment of the present invention, the UPnP device 700 stores, in the content DB 660, a date and time of when content was added to the content DB 660, and only connects (in accordance with the synchronization policy) to the device sending an event message if the content update unit 650 determines that the content modification described in the event message occurred later in time than the addition of the content to the content database 660.

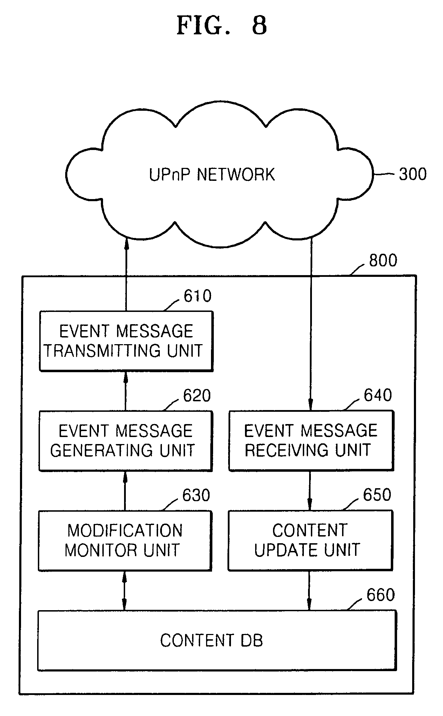

FIG. 8 is a block diagram of a UPnP device that synchronizes a content directory service, according to another embodiment of the present invention. In FIG. 8, the UPnP device 800 includes an event message transmitting unit 610, an event message generating unit 620, a modification monitor unit 630, an event message receiving unit 640, a content update unit 650, and a content database (DB) 660. The UPnP device 800 is connected to a UPnP network 300. The purpose and function of the event message transmitting unit 610, the event message generating unit 620, the modification monitor unit 630, the event message receiving unit 640, the content update unit 650, and the content DB 660 are described above with reference to FIGS. 6 and 7.

The UPnP device 800 is capable of both sending and receiving event messages related to modified content. If the content in the content DB 660 of the UPnP device 800 is modified, the UPnP device 800 notifies other devices (not shown) on the UPnP network 300 of the modification of content, so that the other devices can synchronize their CDSs with the UPnP device 800. The UPnP device 800 can also receive and act on an event message sent by a similarly configured device with modified content and from a device with modified content configured as shown in FIG. 6. Using a synchronization policy (described above), the UPnP device 800 synchronizes the content DB 660 with the modified device that sent the event message. The UPnP device 800 may also determine whether to synchronize with the modified device, based on additional information encoded in the event message, as described above.

The above embodiments of the present invention can be embodied as a program that can be executed in a computer, and realized in general digital computer, which can execute the program, via a computer readable medium. The computer readable medium may be any recording apparatus capable of storing data that is read by a computer system, e.g., a read-only memory (ROM), a random access memory (RAM), flash memory, a compact disc (CD)-ROM, a magnetic tape, a floppy disk, an optical data storage device, and so on. In addition, the computer readable medium may be a computer data signal embodied in a carrier wave comprising a compression source code segment and an encryption source code segment (such as data transmission through the Internet).

While example embodiments of the present invention have been shown that operate in a UPnP AV environment and involve multimedia content, it will be recognized by those skilled in the art that embodiments of the present invention relate to both UPnP and UPnP AV, as both standards incorporate the service type "content directory service". Also, the UPnP AV standard adds additional class descriptions for items and containers descriptors to items (e.g., audioBook, musicVideoClip, musicAlbum), and it will be understood by those skilled in the art that embodiments of the present invention can utilize these UPnP AV standards (e.g., a synchronization policy based on only updating changed audioBook content).

According to embodiments of the present invention, a control point is not required to and does not intervene in a process of synchronizing a plurality of CDSs, thereby minimizing the load on a memory or on a CPU of the control point, compared to conventional UPnP synchronization. In addition, since an action of a CDS need not be repeatedly called, network traffic can be reduced.

Although a few embodiments of the present invention have been shown and described, it would be appreciated by those skilled in the art that changes may be made in this embodiment without departing from the scope of the invention, which is defined in the claims and their equivalents.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of synchronizing a content directory service of a Universal Plug and Play device, i.e. a UPnP device, the method being **characterized by**:
sensing by said UPnP device whether the content thereof has been modified (401);
if said content has been modified, subsequently generating (402) by the UPnP device an event message comprising information related to the modified content; and
multicasting (403) by said UPnP device the generated event message on a UPnP network to each UPnP device on the UPnP network.

2. The method of claim 1 or 2, wherein the UPnP device supports UPnP AV (Audio/Video) Architecture.

3. The method of claim 1, wherein the information related to the modified content is expressed using a DIDL-Lite (Digital Item Declaration Language) object.

4. The method of claim 3, wherein the information related to the modified content represents at least one of: content addition, content change, or content deletion was performed on an object related to the modified content.

5. The method of any preceding claim, wherein the generated event message further comprises:
a format specification of the modified content, with which a second device determines if the second device is, or for deleted content was, capable of reproducing the modified content.

6. The method of any preceding claim, wherein the generated event message further comprises:
a date and time of the modification of content.

7. A computer readable medium having recorded thereon a computer program for executing the method of any preceding claim.

8. A Universal Plug and Play device, i.e. a UPnP device, comprising an apparatus (600) for synchronizing a content directory service of said Universal Plug and Play (UPnP) device, the apparatus being **characterized by**:
a content database (660) comprising content;
a modification monitor unit (630) to sense if the content is modified;
an event message generating unit (620) to generate an event message comprising information related to the modified content that was sensed by the modification monitor unit; and
an event message transmitting unit (610) to multicast the generated event message on a UPnP network to each other UPnP device on the UPnP network.

9. The apparatus of claim 8, wherein the UPnP device supports UPnP AV (Audio/Video) Architecture.

10. The apparatus of claim 8 or 9, wherein the information related to the modified content is expressed using a DIDL-Lite (Digital Item Declaration Language) object.

11. The apparatus of claim 10, wherein the information related to the modified content represents at least one of: content addition, content change, or content deletion was performed on an object related to the modified content.

12. The apparatus of any of claims 8-11, wherein the generated event message further comprises:
a format specification of the modified content, with which a second device determines if the second device is, or for deleted content was, capable of reproducing the modified content.

13. A method of synchronizing a content directory service of a Universal Plug and Play device, i.e. a UPnP device, the method being **characterized by**:
receiving (501) by said UPnP device an event message comprising information related to modified content from another modified device;
determining (502) by said UPnP device if the content thereof should be synchronized with the other UPnP device based on the received event message in accordance with a predetermined synchronization policy; and
synchronizing (503) by said UPnP device the content of the UPnP device with said other UPnP device selectively based on the determining step (502).

14. The method of claim 13, wherein the UPnP device supports UPnP AV (Audio/Video) Architecture.

15. The method of claim 13 or14, wherein the information related to the modified content is expressed using a DIDL-Lite (Digital Item Declaration Language) object.

16. The method of any of claims 13-15, wherein the synchonization is performed only if the modification of content is determined to have occurred subsequent to the last synchronization of the modified device with the UPnP device referring to time information indicating the date and time of the modification of content, wherein the time information is included in the received event message.

17. The method of any of claims 13-16, wherein the synchonization is performed only if the UPnP device determines the UPnP device is capable of reproducing the modified content referring to a format specification of the modified content, wherein the format specification is included in the received event message.

18. A computer readable medium having recorded thereon a computer program for executing the method of any of claims 13-17.

19. A Universal Plug and Play device, i.e. a UPnP device, comprising an apparatus (700) for synchronizing a content directory service of said UPnP device, said apparatus being **characterized by**:
a content database (660) comprising content;
an event message receiving unit (640) to receive a event message comprising information related to modified content from another device; and
a content update unit (650) for determining if the content of the UPnP device should be synchronized with said another UPnP device based on the received event message in accordance with a predetermined synchronization policy and for updating content of the UPnP device selectively based on the received event message.

20. The apparatus of claim 19, wherein the UPnP device:supports UPnP AV (Audio/Video) Architecture.

21. The apparatus of claim 20, wherein the information relating to the modified content is expressed using a DIDL-Lite (Digital Item Declaration Language) object.

22. The apparatus of any of claims 19-21, wherein the content update unit (650) updates content of the UPnP device only if the modification of content is determined to have occurred subsequent to the last synchronization of the modified device with the UPnP device referring to time information indicating the date and time of the modification of content, wherein the time information is included in the received event message.

23. The apparatus of any of claims 19-22, wherein the content update unit updates content of the UPnP device only if the UPnP device determines the UPnP device is capable of reproducing the modified content referring to a format specification of the modified content, wherein the format specification is included in the received event message.

## Patentansprüche

1. Verfahren zum Synchronisieren eines Inhaltsverzeichnisdienstes einer Universal-Plug-and-Play-Vorrichtung, d.h. einer UPnP-Vorrichtung, wobei das Verfahren **gekennzeichnet ist durch**:
Wahrnehmen **durch** die UPnP-Vorrichtung, ob der Inhalt derselben geändert worden ist (401);
falls der Inhalt geändert worden ist, anschließendes Erzeugen (402), **durch** die UPnP-Vorrichtung, einer Ereignisnachricht, die den geänderten Inhalt betreffende Informationen umfasst; und
Multicasting (403), **durch** die UPnP-Vorrichtung, der erzeugten Ereignisnachricht auf einem UPnP-Netzwerk an jede UPnP-Vorrichtung auf dem UPnP-Netzwerk.

2. Verfahren nach Anspruch 1 oder 2, wobei die UPnP-Vorrichtung UPnP-AV-(Audio/Video)-Architektur unterstützt.

3. Verfahren nach Anspruch 1, wobei die den geänderten Inhalt betreffenden Informationen unter Verwendung eines DIDL-Lite-(Digital Item Declaration Language)-Objekts ausgedrückt werden.

4. Verfahren nach Anspruch 3, wobei die den geänderten Inhalt betreffenden Informationen zumindest eines darstellen von: Inhaltshinzufügung, Inhaltsänderung oder Inhaltslöschung wurde an einem den geänderten Inhalt betreffenden Objekt durchgeführt.

5. Verfahren nach einem der vorstehenden Ansprüche, wobei die erzeugte Ereignisnachricht weiterhin umfasst:
eine Formatspezifikation des geänderten Inhalts, mit der eine zweite Vorrichtung feststellt, ob die zweite Vorrichtung zur Wiedergabe des geänderten Inhalts in der Lage ist oder, bezüglich gelöschten Inhalts, war.

6. Verfahren nach einem der vorstehenden Ansprüche, wobei die erzeugte Ereignisnachricht weiterhin umfasst:
ein Datum und eine Zeit der Inhaltsänderung.

7. Computerlesbares Medium mit einem darauf aufgezeichneten Computerprogramm zum Ausführen des Verfahrens nach einem der vorstehenden Ansprüche.

8. Universal-Plug-and-Play-Vorrichtung, d.h. UPnP-Vorrichtung, umfassend ein Gerät (600) zum Synchronisieren eines Inhaltsverzeichnisdienstes der Universal-Plug-and-Play-(UPnP)-Vorrichtung, wobei das Gerät **gekennzeichnet ist durch**:
eine Inhaltsdatenbank (660), die Inhalt umfasst;
eine Änderungsüberwachungseinheit (630), um wahrzunehmen, ob der Inhalt geändert wird;
eine Ereignisnachrichterzeugungseinheit (620), um eine Ereignisnachricht zu erzeugen, die Informationen umfasst, die den geänderten Inhalt betreffen, der von der Änderungsüberwachungseinheit wahrgenommen wurde; und
eine Ereignisnachrichtsendeeinheit (610), um die erzeugte Ereignisnachricht auf einem UPnP-Netzwerk an jede andere UPnP-Vorrichtung auf dem UPnP-Netzwerk zu multicasten.

9. Gerät nach Anspruch 8, wobei die UPnP-Vorrichtung UPnP-AV-(Audio/Video)-Architektur unterstützt.

10. Gerät nach Anspruch 8 oder 9, wobei die den geänderten Inhalt betreffenden Informationen unter Verwendung eines DIDL-Lite-(Digital Item Declaration Language)-Objekts ausgedrückt werden.

11. Gerät nach Anspruch 10, wobei die den geänderten Inhalt betreffenden Informationen zumindest eines darstellen von: Inhaltshinzufügung, Inhaltsänderung oder Inhaltslöschung wurde an einem den geänderten Inhalt betreffenden Objekt durchgeführt.

12. Gerät nach einem der Ansprüche 8 - 11, wobei die erzeugte Ereignisnachricht weiterhin umfasst:
eine Formatspezifikation des geänderten Inhalts, mit der eine zweite Vorrichtung feststellt, ob die zweite Vorrichtung zur Wiedergabe des geänderten Inhalts in der Lage ist, oder, bezüglich gelöschten Inhalts, war.

13. Verfahren zum Synchronisieren eines Inhaltsverzeichnisdienstes einer Universal-Plug-and-Play-Vorrichtung, d.h. einer UPnP-Vorrichtung, wobei das Verfahren **gekennzeichnet ist durch**:
Empfangen (501), **durch** die UPnP-Vorrichtung, einer Ereignisnachricht, die geänderten Inhalt betreffende Informationen umfasst, aus einer anderen, geänderten Vorrichtung;
Feststellen (502) **durch** die UPnP-Vorrichtung, ob der Inhalt derselben mit der anderen UPnP-Vorrichtung synchronisiert werden sollte, auf Grundlage der empfangenen Ereignisnachricht, in Übereinstimmung mit einer vorgegebenen Synchronisationsrichtlinie; und
selektives Synchronisieren (503), **durch** die UPnP-Vorrichtung, des Inhalts der UPnP-Vorrichtung mit der anderen UPnP-Vorrichtung auf Grundlage des Feststellungsschritts (502).

14. Verfahren nach Anspruch 13, wobei die UPnP-Vorrichtung UPnP-AV-(Audio/Video)-Architektur unterstützt.

15. Verfahren nach Anspruch 13 oder 14, wobei die den geänderten Inhalt betreffenden Informationen unter Verwendung eines DIDL-Lite-(Digital Item Declaration Language)-Objekts ausgedrückt werden.

16. Verfahren nach einem der Ansprüche 13 - 15, wobei die Synchronisation nur dann durchgeführt wird, wenn festgestellt wird, dass die Inhaltsänderung im Anschluss an die letzte Synchronisation der geänderten Vorrichtung mit der UPnP-Vorrichtung erfolgt ist, unter Bezugnahme auf Zeitinformationen, die das Datum und die Zeit der Inhaltsänderung angeben, wobei die Zeitinformationen in der empfangenen Ereignisnachricht enthalten sind.

17. Verfahren nach einem der Ansprüche 13 - 16, wobei die Synchronisation nur dann durchgeführt wird, wenn die UPnP-Vorrichtung feststellt, dass die UPnP-Vorrichtung zur Wiedergabe des geänderten Inhalts in der Lage ist, unter Bezugnahme auf eine Formatspezifikation des geänderten Inhalts, wobei die Formatspezifikation in der empfangenen Ereignisnachricht enthalten ist.

18. Computerlesbares Medium mit einem darauf aufgezeichneten Computerprogramm zum Ausführen des Verfahrens nach einem der Ansprüche 13 -17.

19. Universal-Plug-and-Play-Vorrichtung, d.h. UPnP-Vorrichtung, umfassend ein Gerät (700) zum Synchronisieren eines Inhaltsverzeichnisdienstes der UPnP-Vorrichtung, wobei das Gerät **gekennzeichnet ist durch**:
eine Inhaltsdatenbank (660), die Inhalt umfasst;
eine Ereignisnachrichtempfangseinheit (640), um eine Ereignisnachricht, die geänderten Inhalt betreffende Informationen umfasst, aus einer anderen Vorrichtung zu empfangen; und
eine Inhaltsaktualisierungseinheit (650) zum Feststellen, ob der Inhalt der UPnP-Vorrichtung mit der anderen UPnP-Vorrichtung synchronisiert werden sollte, auf Grundlage der empfangenen Ereignisnachricht, in Übereinstimmung mit einer vorgegebenen Synchronisationsrichtlinie, und zum selektiven Aktualisieren von Inhalt der UPnP-Vorrichtung auf Grundlage der empfangenen Ereignisnachricht.

20. Gerät nach Anspruch 19, wobei die UPnP-Vorrichtung UPnP-AV- (Audio/Video) -Architektur unterstützt.

21. Gerät nach Anspruch 20, wobei die den geänderten Inhalt betreffenden Informationen unter Verwendung eines DIDL-Lite-(Digital Item Declaration Language)-Objekts ausgedrückt werden.

22. Gerät nach einem der Ansprüche 19 - 21, wobei die Inhaltsaktualisierungseinheit (650) Inhalt der UPnP-Vorrichtung nur dann aktualisiert, wenn festgestellt wird, dass die Inhaltsänderung im Anschluss an die letzte Synchronisation der geänderten Vorrichtung mit der UPnP-Vorrichtung erfolgt ist, unter Bezugnahme auf Zeitinformationen, die das Datum und die Zeit der Inhaltsänderung angeben, wobei die Zeitinformationen in der empfangenen Ereignisnachricht enthalten sind.

23. Gerät nach einem der Ansprüche 19 - 22, wobei die Inhaltsaktualisierungseinheit Inhalt der UPnP-Vorrichtung nur dann aktualisiert, wenn die UPnP-Vorrichtung feststellt, dass die UPnP-Vorrichtung zur Wiedergabe des geänderten Inhalts in der Lage ist, unter Bezugnahme auf eine Formatspezifikation des geänderten Inhalts, wobei die Formatspezifikation in der empfangenen Ereignisnachricht enthalten ist.

## Revendications

1. Procédé de synchronisation d'un service de répertoire de contenu d'un dispositif Universal Plug and Play, autrement dénommé dispositif UPnP, le procédé étant **caractérisé par** :
la détection par ledit dispositif UPnP de la modification éventuelle de son contenu (401) ;
si ledit contenu a été modifié, la génération (402) subséquente par le dispositif UPnP d'un message d'événement comprenant des informations concernant le contenu modifié ; et
la multidiffusion (403), par ledit dispositif UPnP, du message d'événement généré, sur un réseau UPnP, à chaque dispositif UPnP du réseau UPnP.

2. Procédé selon la revendication 1 ou 2, dans lequel le dispositif UPnP supporte une architecture UPnP AV (Audio-Vidéo).

3. Procédé selon la revendication 1, dans lequel les informations concernant le contenu modifié sont exprimées au moyen d'un objet DIDL-Lite (Digital Item Declaration Language).

4. Procédé selon la revendication 3, dans lequel les informations concernant le contenu modifié représentent au moins un élément parmi : un ajout de contenu, une modification de contenu et une suppression de contenu, réalisés sur un objet lié au contenu modifié.

5. Procédé selon l'une quelconque des revendications précédentes, dans lequel le message d'événement généré comprend en outré :
une spécification relative au format du contenu modifié, avec laquelle un second dispositif détermine si le second dispositif est, (ou, pour un contenu supprimé, était) capable de restituer le contenu modifié.

6. Procédé selon l'une quelconque des revendications précédentes, dans lequel le message d'événement généré comprend en outré :
la date et l'heure de la modification du contenu.

7. Support lisible par ordinateur présentant un programme informatique enregistré sur celui-ci, destiné à exécuter le procédé selon l'une quelconque des revendications précédentes.

8. Dispositif Universal Plug and Play, autrement dénommé dispositif UPnP, comprenant un appareil (600) destiné à synchroniser un service de répertoire de contenu d'un dispositif Universal Plug et Play (UPnP), l'appareil étant **caractérisé par** :
une base de données de contenu (660) comprenant du contenu ;
une unité de surveillance de modifications (630) destinée à détecter si le contenu a été modifié ;
une unité génératrice de message d'événement (620) destinée à générer un message d'événement comprenant des informations concernant le contenu modifié qui a été détecté par l'unité de surveillance de modifications ; et
une unité d'émission de message d'événement (610) destinée à multidiffuser le message d'événement généré, sur un réseau UPnP, à chacun des autres dispositifs UPnP du réseau UPnP.

9. Appareil selon la revendication 8, dans lequel le dispositif UPnP supporte une architecture UPnP AV (Audio-Vidéo).

10. Appareil selon la revendication 8 ou 9, dans lequel les informations concernant le contenu modifié sont exprimées au moyen d'un objet DIDL-Lite (Digital Item Declaration Language).

11. Appareil selon la revendication 10, dans lequel les informations concernant le contenu modifié représentent au moins un élément parmi : un ajout de contenu, une modification de contenu, ou une suppression de contenu, réalisés sur un objet lié au contenu modifié.

12. Appareil selon l'une quelconque des revendications 8 à 11, dans lequel le message d'événement généré comprend en outré :
une spécification relative au format du contenu modifié, avec laquelle un second dispositif détermine si le second dispositif est, (ou, pour un contenu supprimé, était), capable de restituer le contenu modifié.

13. Procédé de synchronisation d'un service de répertoire de contenu d'un dispositif Universal Plug and Play, autrement dénommé dispositif UPnP, le procédé étant **caractérisé par** :
la réception (501), par ledit dispositif UPnP, d'un message d'événement comprenant des informations concernant un contenu modifié en provenance d'un autre dispositif modifié ;
la détermination (502), par ledit dispositif UPnP, du fait que son contenu devrait ou non être synchronisé par rapport à l'autre dispositif UPnP en se fondant sur le message d'événement reçu, conformément à une pratique de synchronisation prédéterminée ; et
la synchronisation (503), par ledit dispositif UPnP, du contenu du dispositif UPnP par rapport audit autre dispositif UPnP en se fondant, de manière sélective, sur l'étape de détermination (502).

14. Procédé selon la revendication 13, dans lequel le dispositif UPnP supporte une architecture UPnP AV (Audio-Vidéo).

15. Procédé selon la revendication 13 ou 14, dans lequel les informations concernant le contenu modifié sont exprimées au moyen d'un objet DIDL-Lite (Digital Item Declaration Language).

16. Procédé selon l'une quelconque des revendications 13 à 15, dans lequel la synchronisation ne s'effectue que s'il a été déterminé que la modification du contenu s'est produite après la dernière synchronisation du dispositif modifié par rapport au dispositif UPnP en référence à des informations temporelles indiquant la date et l'heure de la modification du contenu, les informations temporelles étant incluses dans le message d'événement reçu.

17. Procédé selon l'une quelconque des revendications 13 à 16, dans lequel la synchronisation ne s'effectue que s'il a été déterminé par le dispositif UPnP que ce dispositif UPnP est capable de restituer le contenu modifié en référence à une spécification relative au format du contenu modifié, la spécification relative au format étant incluse dans le message d'événement reçu.

18. Support lisible par ordinateur présentant un programme informatique enregistré sur celui-ci, destiné à exécuter le procédé selon l'une quelconque des revendications 13 à 17.

19. Dispositif Universal Plug and Play, autrement dénommé dispositif UPnP, comprenant un appareil (700) destiné à synchroniser un service de répertoire de contenu dudit dispositif UPnP, ledit appareil étant **caractérisé par** :
une base de données de contenu (660) comprenant du contenu ;
une unité réceptrice de message d'événement (640) destinée à recevoir un message d'événement comprenant des informations concernant un contenu modifié en provenance d'un autre dispositif ; et
une unité de mise à jour de contenu (650) destinée à déterminer si le contenu du dispositif UPnP devrait être synchronisé par rapport à un autre dispositif UPnP en se fondant sur le message d'événement reçu conformément à une pratique de synchronisation prédéterminée et à mettre à jour le contenu du dispositif UPnP en se fondant, de manière sélective, sur le message d'événement reçu.

20. Appareil selon la revendication 19, dans lequel le dispositif UPnP supporte une architecture UPnP AV (Audio-Vidéo).

21. Appareil selon la revendication 20, dans lequel les informations concernant le contenu modifié sont exprimées au moyen d'un objet DIDL-Lite (Digital Item Declaration Language).

22. Appareil selon l'une quelconque des revendications 19 à 21, dans lequel l'unité de mise à jour de contenu (650) ne met à jour le contenu du dispositif UPnP que s'il a été déterminé que la modification du contenu s'est produire après la dernière synchronisation du dispositif modifié par rapport au dispositif UPnP en référence à des informations temporelles indiquant la date et l'heure de la modification du contenu, les informations temporelles étant incluses dans le message d'événement reçu.

23. Appareil selon l'une quelconque des revendications 19 à 22, dans lequel l'unité de mise à jour de contenu ne met à jour le dispositif UPnP que s'il a été déterminé par le dispositif UPnP que ce dispositif UPnP est capable de restituer le contenu modifié en référence à une spécification relative au format du contenu modifié, la spécification relative au format étant incluse dans le message d'événement reçu.
